# EUROPÄISCHE PATENTSCHRIFT

(11) **EP 1 755 824 B1**
(45) Veröffentlichungstag und Bekanntmachung des Hinweises auf die Patenterteilung: **28.11.2007**
(21) Anmeldenummer: 05769783.1
(22) Anmeldetag: 28.07.2005
(51) Int. Cl.: B23Q 39/00, B23B 3/30, B23Q 11/08, B23Q 1/01

(54) **VERTIKALDREHMASCHINE MIT ZWEI ABWECHSELND ARBEITENDEN WERKSTÜCKSPINDELN**
VERTICAL ROTATING MACHINE COMPRISING TWO ALTERNATING WORKING WORKPIECE SPINDLES
TOUR VERTICAL COMPORTANT DEUX BROCHES PORTE-PIECE FONCTIONNANT EN ALTERNANCE

(30) Priorität: 14.12.2004 DE 102004062375
(43) Veröffentlichungstag der Anmeldung: 28.02.2007
(73) Patentinhaber: FELSOMAT GmbH & Co. KG, D-75203 Königsbach-Stein (DE)
(72) Erfinder: JÄGER, Helmut, 75203 Königsbach-Stein (DE)
(74) Vertreter: Kohler Schmid Möbus
(86) Internationale Anmeldenummer: PCT/DE2005/001325
(87) Internationale Veröffentlichungsnummer: WO 2006/063540

(56) Entgegenhaltungen:
- EP-A- 0 329 983
- WO-A1-20/04045803
- DE-C1- 19 613 641
- US-A- 5 435 675

## Beschreibung

Die Erfindung betrifft eine Drehmaschine umfassend ein Maschinenbett und eine erste und eine zweite Werkstückspindel, wobei die Werkstückspindeln parallel zueinander angeordnet sind, und weiterhin umfassend genau einen Werkzeugträger für ein oder mehrere Werkzeuge, wobei die Spindelachsen der Werkstückspindeln vertikal ausgerichtet sind, wobei die Werkstückspindeln ein oben aufgebautes Spannmittel aufweisen, und wobei der Werkzeugträger relativ zum Maschinenbett verfahrbar ist, so dass alternativ entweder ein Werkstück der ersten Werkstückspindel oder ein Werkstück der zweiten Werkstückspindel mit einem Werkzeug des Werkzeugträgers bearbeitbar ist.

Eine Drehmaschine dieser Gattung ist bekannt geworden aus der WO 2004/045803 A1.

Drehmaschinen werden zur Bearbeitung von Werkstücken eingesetzt. Dazu wird ein Werkstück in ein Spannfutter einer Werkstückspindel eingespannt, und die Werkstückspindel wird auf eine hohe Drehzahl beschleunigt. Ein Werkzeug wird an das rotierende Werkstück herangeführt und trägt Material vom Werkstück ab. Typischerweise wird sodann zu anderen Werkzeugen gewechselt, die an einem Werkzeugträger angeordnet sind. Nach Abschluss der Bearbeitung durch das oder die Werkzeuge wird die Werkstückspindel abgebremst und das bearbeitete Werkstück ausgespannt. Anschließend kann ein weiteres Werkstück auf der Drehmaschine eingespannt und bearbeitet werden.

Diejenige Zeit, die bei einer Drehmaschine zwischen dem Ende der Bearbeitung eines ersten Werkstücks und dem Beginn der Bearbeitung eines weiteren Werkstücks mit denselben Werkzeugen vergeht, wird als Nebenzeit bezeichnet. Nebenzeit entsteht bei Drehmaschinen des Standes der Technik insbesondere durch die erforderliche Zeit für einen Werkstückwechsel an einer Werkstückspindel. Je geringer die Nebenzeit, desto besser ist die Auslastung der Werkzeuge der Drehmaschine. Eine hohe Auslastung verringert die Bearbeitungskosten der Werkstücke.

Aus der DE-GM 87 00 343.0 ist eine Drehmaschine mit zwei parallelen, horizontal angeordneten Werkstückspindeln bekannt geworden. Die beiden Werkstückspindeln sind zusammen auf einem Kreuzschlitten angeordnet, der eine Positionierung relativ zu einem Aufnahmekörper für Werkzeuge gestattet. Der Aufnahmekörper ist in 90°-Schritten schwenkbar, um verschiedene Sätze von Werkzeugen für die Werkstückspindeln zur Verfügung zu stellen. Im übrigen ist der Aufnahmekörper fest in der Drehmaschine angeordnet. Mit dieser Drehmaschine ist grundsätzlich nur eine Synchronbearbeitung von zwei gleichen Werkstücken möglich, d.h. bei beiden Werkstückspindeln sind die fest zugeordneten Werkzeuge grundsätzlich synchron im Einsatz. Mit der Drehmaschine soll wahlweise nur eine Dreharbeit mit einem Werkzeug an einer Werkstückspindel vorgenommen werden können, wobei die zweite Werkstückspindel dann für die zwischenzeitliche Bestückung mit Werkstücken für nachfolgende Arbeitsgänge eingesetzt wird.

Bei der Drehmaschine der DE-GM 87 00 343.0 erweist sich aber ein Wechsel des Werkstücks an der zweiten Werkstückspindel, wenn gleichzeitig an der ersten Werkstückspindel eine Bearbeitung stattfindet, als nur sehr schwer möglich. Die beiden Werkstückspindeln können nur gleichzeitig mit dem Kreuzschlitten verfahren werden, und die Bearbeitung am Werkstück der ersten Werkstückspindel erfordert ein ständiges Verfahren des Kreuzschlittens. Die zweite Werkstückspindel kann dann aber für einen Werkstückwechsel nicht ruhig gehalten werden. Dadurch entsteht für den Werkstückwechsel an der zweiten Werkstückspindel ein erheblicher Koordinationsaufwand, und bei manuellen Werkstückwechseln besteht Verletzungsgefahr durch Manipulationen an bewegten Teilen. Die Druckschrift konzentriert sich ausschließlich auf Konzepte zur Synchronbearbeitung zweier Werkstücke auf den zwei parallelen Werkstückspindeln. Andere Bearbeitungsmöglichkeiten von Werkstücken sind dieser Druckschrift nicht zu entnehmen.

Die DE 35 25 276 A1 beschreibt einen Drehautomat mit zwei ortsfesten Arbeitsspindeln und drei verfahrbaren Werkzeugträgern. Zwei der Werkzeugträger sind je einer eigenen Arbeitsspindel zugeordnet, wohingegen der dritte Werkzeugträger nach Bedarf einer der Arbeitsspindeln zugeordnet werden kann. Bei unterschiedlich aufwändigen Bearbeitungen des selben Werkstücks nacheinander auf den beiden Arbeitsspindeln kann mit dem dritten Werkzeugträger einer der beiden fest zugeordneten Werkzeugträger unterstützt werden. Dadurch kann nur die Bearbeitungszeit an den Arbeitsspindeln dieser Drehmaschine verkürzt werden. Die für den Werkstückwechsel weiterhin erforderlichen Nebenzeiten werden durch den Einsatz eines dritten Werkzeugträgers nicht verkürzt.

WO 2004/045803 A1 zeigt eine Ausrüstung zur mechanischen Bearbeitung mit einer Drehstation. Die Drehstation umfasst zwei vertikale Werkstückspindeln sowie einen horizontal verfahrbaren Werkzeugträger, mit dem auf den Werkstückspindeln angeordnete Werkstücke abwechselnd bearbeitet werden können.

US 5,435,675 beschreibt eine Bearbeitungsmaschine mit einem Werkzeugtisch mit zwei Werkstückpositionen und einem Spindelkopf, wobei der Spindelkopf relativ zum Werkzeugtisch zwischen den Werkzeugpositionen verfahrbar ist. Mittig zwischen den Werkstückpositionen ist ein verschiebbarer Schutzschild angeordnet. Zum Verfahren des Spindelkopfes wird der Schutzschild zurückgezogen, um den Weg für den Spindelkopf freizumachen. Während der Bearbeitung eines Werkstückes versperrt der Schutzschild den Verfahrweg des Spindelkopfes und trennt so die Werkstückpositionen.

### Aufgabe der Erfindung

Aufgabe der vorliegenden Erfindung ist es demgegenüber, eine Drehmaschine zu schaffen, bei der die Nebenzeit auf ein Minimum verkürzt ist, und die gleichzeitig einfach aufgebaut und sicher zu handhaben ist.

### Beschreibung der Erfindung

Diese Aufgabe wird erfindungsgemäß durch eine Drehmaschine der eingangs vorgestellten Art gelöst, die dadurch gekennzeichnet ist, dass der Werkzeugträger als Revolverdrehkopf ausgebildet ist, und dass zwei bewegliche Schutzschilde vorgesehen sind, wobei das erste Schutzschild zwischen der ersten Werkstückspindel und dem Werkzeugträger anordenbar ist, wenn der Werkzeugträger in einer ersten Position ist, in der ein Werkstück der zweiten Werkstückspindel bearbeitbar ist, und wobei das zweite Schutzschild zwischen der zweiten Werkstückspindel und dem Werkzeugträger anordenbar ist, wenn der Werkzeugträger in einer zweiten Position ist, in der ein Werkstück der ersten Werkstückspindel bearbeitbar ist.

Bei der erfindungsgemäßen Drehmaschine wird der Werkzeugträger hin zu einer der beiden Werkstückspindeln, etwa zur ersten Werkstückspindel, verfahren, um mit seinen Werkzeugen eine Bearbeitung am dortigen Werkstück vorzunehmen. Während der Bearbeitung des Werkstücks der ersten Werkstückspindel ist es lediglich erforderlich, den Werkzeugträger lokal im Bereich der ersten Werkstückspindel zu verfahren. Die zweite Werkstückspindel verbleibt gleichzeitig relativ zum Maschinenbett in Ruhe, so dass an ihr leicht ein Werkstückwechsel vorgenommen werden kann. Für diesen Werkstückwechsel steht die gesamte Bearbeitungszeit des Werkstücks der ersten Werkstückspindel zur Verfügung, wobei keinerlei Koordination mit Abläufen an der ersten Werkstückspindel erforderlich ist. Dies vereinfacht sowohl einen manuellen Werkstückwechsel, dessen Ablauf insbesondere in Beginn und Dauer nicht genau reproduzierbar ist, als auch einen automatisierten Wechsel. Weder beeinträchtigt der Werkstückwechsel an der zweiten Werkstückspindel die Bearbeitung des Werkstücks der ersten Werkstückspindel, noch beeinträchtigt die Bearbeitung des Werkstücks der ersten Werkstückspindel den Werkstückwechsel an der zweiten Werkstückspindel. Wenn die Bearbeitung am Werkstück der ersten Werkstückspindel abgeschlossen ist, braucht der Werkzeugträger lediglich zur zweiten Werkstückspindel zu verfahren und kann die Bearbeitung an dem dortigen, kurz zuvor eingespannten Werkstück fortsetzen. Dadurch wird die Nebenzeit, also diejenige Zeit, in der die Werkzeuge keine Bearbeitung vornehmen, auf die Verfahrzeit zwischen den Werkstückspindeln verkürzt. Die erforderliche Zeit für einen Werkstückwechsel an einer Werkstückspindel hat in der Regel, nämlich solange sie kürzer ist als die Bearbeitungszeit an einer Werkstückspindel, keinen Einfluss auf die Nebenzeit. Die erfindungsgemäße Drehmaschine erreicht dadurch eine verbesserte Produktivität, insbesondere wenn die Bearbeitungszeiten der Werkstücke kurz sind im Vergleich zu der erforderlichen Zeit für einen Werkstückwechsel an einer Werkstückspindel.

Der erfindungsgemäße geometrische Aufbau der Drehmaschine mit zwei Werkstückspindeln und nur einem zugeordneten Werkzeugträger für beide Werkstückspindeln ermöglichst erst die Realisierung kürzester Verfahrwege und damit auch einen vereinfachten, kompakten Maschinenaufbau. Typischerweise beträgt ein Hub einer erfindungsgemäßen Drehmaschine in X-Richtung maximal 400 mm (beispielsweise für einen Fahrständer), und in Z-Richtung maximal 300 mm (beispielsweise für einen Schlitten). Entsprechend kurze Kugelgewindespindeln oder Linearmotoren sind dann möglich. Die Außenabmessungen des Maschinenbetts betragen typischerweise um 1,5 m. Durch die kompakten Abmessungen wird eine sehr steife Gesamtmaschine möglich, die eine gute Dynamik (d.h. gute Dämpfung gegenüber hochfrequenten Schwingungen) aufweist. Die geringe Vibrationsneigung verringert den Werkzeugverschleiß bzw. verlängert die Standzeiten der Werkzeuge, und erlaubt bessere Oberflächengüten der bearbeiteten Werkstücke. Die infolge des kompakten Maschinenaufbaus hohe Steifigkeit der Drehmaschine ist insbesondere bei der Hartfeinbearbeitung von Vorteil.

Des weiteren werden mit der erfindungsgemäßen Vertikal-Drehmaschine erweiterte Möglichkeiten der Bearbeitung von Werkstücken geschaffen. Auf beiden Werkstückspindeln lassen sich gleiche oder unterschiedliche Bearbeitungsvorgänge realisieren. Bei Bedarf können auf den beiden Werkstückspindeln gleiche oder aber auch unterschiedliche Werkstücke bearbeitet werden. Dies erhöht die Einsatzbreite der erfindungsgemäßen Maschine. Wird eine der beiden Werkstückspindeln zur Umbestückung abgestellt, so kann die erfindungsgemäße Maschine uneingeschränkt weiterbetrieben werden und dies im Einsatz mit der anderen Werkstückspindel.

Erfindungsgemäß wird als Werkzeugträger ein Revolverdrehkopf eingesetzt. Die Werkzeuganordnung am Revolverdrehkopf ist bevorzugt dergestalt, dass bei Abschluss der Bearbeitung an einer Werkstückspindel dasjenige Werkzeug, das als erstes zur Bearbeitung des neuen Werkstücks an der anderen Werkstückspindel eingesetzt werden soll, sich in Bearbeitungsposition für dieses neue Werkstück bezüglich der Drehposition des Revolverdrehkopfs befindet. Dann muss der Revolverdrehkopf für einen Wechsel auf das neue Werkstück nur noch in x-Richtung zur Bearbeitung des neuen Werkstücks (Rohling) verfahren werden. Diese Maßnahme reduziert die Nebenzeit weiter.

Durch die Bearbeitung eines Werkstücks an einer Werkstückspindel entstehen Späne, Staub und Zerspanungsdämpfe. Diese würden den Werkstückwechsel an der benachbarten Werkstückspindel behindern. Durch den jeweiligen Schutzschild wird diese Beeinträchtigung unterbunden, und durch die Beweglichkeit des jeweiligen Schutzschildes wird ein Wechsel zwischen den Werkstückspindeln für den Werkzeugträger möglich. Durch die Schutzschilde erfolgt eine Trennung in zwei Arbeitsräume, nämlich einem Arbeitsraum für die Bearbeitung eines Werkstücks und ein Arbeitsraum für den Wechsel eines Werkstücks.

### Bevorzugte Ausführungsformen der Erfindung

Bei einer bevorzugten Ausführungsform der erfindungsgemäßen Drehmaschine ist der Werkzeugträger in einer ersten Richtung (z-Richtung) parallel zu den Spindelachsen der Werkstückspindeln und in einer zweiten Richtung (x-Richtung) senkrecht zur ersten Richtung auf einer Verbindungslinie zwischen den Spindelachsen mit Hilfe von Führungen verfahrbar. Diese Verfahrbarkeit hat sich für Drehprozesse bewährt. Die Führungen erhöhen die Präzision.

Eine Weiterbildung dieser Ausführungsform sieht vor, dass der Werkzeugträger durch einen Fahrständer verfahrbar ist. Der Fahrständer ist dabei bevorzugt in Mineralguss ausgeführt. Alternativ ist der Werkzeugträger durch einen Kreuzschlitten verfahrbar. Diese Weiterbildungen sind in der Praxis erprobt.

Bei einer anderen Weiterbildung ist der Werkzeugträger als Z-Schlitten ausgebildet. Mit anderen Worten, der Werkzeugträger, der mit festen Werkzeugen oder als Revolverdrehkopf ausgebildet sein kann, ist unmittelbar dann im Schlitten drehbar gelagert, wenn er als Revolverdrehkopf ausgebildet ist. Der Schlitten wirkt unmittelbar mit den Führungen zusammen. Dadurch entfällt eine separate Befestigung des Werkzeugträgers auf einem Schlitten, d.h. es entfallen Trennstellen und deren Bearbeitung. Insgesamt wird dadurch die erreichbare Präzision mit der Drehmaschine verbessert, und die Drehmaschine erfährt weniger Schwingungen.

Eine vorteilhafte Weiterbildung ist dadurch gekennzeichnet, dass bei der Drehmaschine Rollenschuhe für das Zusammenwirken mit den Führungen vorgesehen sind, und dass die Rollenschuhe der X-Führung und der Z-Führung direkt übereinander liegen, wenn der Werkzeugträger sich näherungsweise in einer zur Bearbeitung eines Werkstücks einer Werkstückspindel geeigneten Position befindet. Die Rollenschuhe befinden sich insbesondere dann direkt übereinander, wenn die Rollenschuhe in einer Projektionsebene, zu der parallel die X-Führungen oder bevorzugt die Z-Führungen verlaufen, ineinander liegen oder sich zumindest teilweise überlappen. Dadurch wird eine hohe Steifigkeit der Drehmaschine erreicht, und die Zerspanungskraft kann direkt auf das Maschinenbett einwirken. Der direkteste (kürzeste) Kraftfluss in das Maschinenbett ist in der Nähe der Bearbeitungsposition gegeben, so dass Momente an der Drehmaschine minimiert werden. Die Rollenschuhe sind typischerweise an der Rück- oder Unterseite eines Schlittens oder Fahrständers angeordnet. Es versteht sich, dass die Rollschuhführung durch andere Führungsmittel ersetzt werden kann, wie z.B. hydrostatische Führungsmittel.

Bevorzugt ist weiterhin eine Ausführungsform, bei der die Werkstückspindeln ortsfest im Maschinenbett angeordnet sind. Dadurch wird eine verbesserte Genauigkeit und Reproduzierbarkeit der Werkstückbearbeitung erreicht.

Eine vorteilhafte Weiterbildung dieser Ausführungsform sieht vor, dass im Maschinenbett zylindrische Aufnahmen für die Werkstückspindeln vorgesehen sind, wobei sowohl die X-Führungen als auch die zylindrischen Aufnahmen direkt im Maschinenbett ausgebildet sind. Das gesamte Maschinenbett kann dann in einer einzigen Aufspannung mit großer Präzision gefertigt werden. Trennstellen und deren Bearbeitung entfallen. Dadurch werden Genauigkeit und Reproduzierbarkeit der Werkstückbearbeitung an der Drehmaschine weiter verbessert.

Bevorzugt ist weiterhin eine Ausführungsform, bei der das Maschinenbett als Mineralgussbett ausgebildet ist. Das Mineralgussbett verbessert die Dämpfungseigenschaften der Drehmaschine.

Weiterhin ist bei einer vorteilhaften Ausführungsform vorgesehen, dass das gesamte Maschinenbett einen temperaturisolierten Spänedurchfluss aufweist. Dadurch wird ein Wärmeeintrag durch heiße Späne und damit eine Wärmeausdehnung im Maschinenbett verhindert. Bevorzugt ist ein Spänetrichter am Maschinenbett ausgebildet, der durch einen hinreichend steilen Schüttwinkel die Ausbildung von Spänenestern verhindert. Der Spänetrichter ist bevorzugt aus doppelwandigem Blech gefertigt, so dass zwischen den Blechen ein kühlender Luftstrom eingerichtet werden kann. Alternativ kann der Spänedurchfluss auch wassergekühlt sein. Der Spänedurchfluss deckt erfindungsgemäß das Maschinenbett so vollständig ab, dass bei der Bearbeitung eines Werkstücks entstehende Späne nicht direkt in Kontakt mit dem Maschinenbett kommen können, sondern vollständig in den Spänedurchfluss gelangen.

Eine besonders bevorzugte Ausführungsform sieht vor, dass ein Schutzgehäuse vorgesehen ist, in dem das erste und das zweite bewegliche Schutzschild als eine erste und eine zweite vertikal verfahrbare Schiebetür ausgebildet sind. Das Schutzgehäuse gestattet einen umfassenderen Verschmutzungsschutz, und die Schiebetüren können gezielt geöffnet werden, um ein Werkstück und den Werkzeugträger zusammenzuführen.

Eine erfindungsgemäße Drehmaschine wird bevorzugt betrieben durch ein Betriebsverfahren mit folgenden Schritten:
a) In die erste Werkstückspindel wird ein zu bearbeitendes Werkstück eingespannt;
b) Der Werkzeugträger verfährt zur ersten Werkstückspindel und bearbeitet das dortige Werkstück; gleichzeitig wird in die zweite Werkstückspindel ein zu bearbeitendes Werkstück eingespannt, wobei die zweite Werkstückspindel relativ zum Maschinenbett in Ruhelage verbleibt;
c) Der Werkzeugträger verfährt zur zweiten Werkstückspindel und bearbeitet das dortige Werkstück; gleichzeitig wird das bearbeitete Werkstück der ersten Werkstückspindel gegen ein zu bearbeitendes Werkstück ausgetauscht, wobei die erste Werkstückspindel relativ zum Maschinenbett in Ruhelage Verbleibt;
d) Der Werkzeugträger verfährt zur ersten Werkstückspindel und bearbeitet das dortige Werkstück; gleichzeitig wird das bearbeitete Werkstück der zweiten Werkstückspindel gegen ein zu bearbeitendes Werkstück ausgetauscht, wobei die zweite Werkstückspindel relativ zum Maschinenbett in Ruhelage verbleibt;
e) Die Schritte c) und d) werden ein oder mehrmals wiederholt.
Durch dieses Betriebsverfahren wird die Nebenzeit der betriebenen Drehmaschine auf die Zeit des Verfahrens des Werkzeugträgers zwischen den Werkstückspindeln verkürzt und dadurch die Produktivität der betriebenen Drehmaschine optimiert. Der Austausch eines Werkstücks im obigen Sinne umfasst typischerweise folgende Schritte: Die entsprechende Werkstückspindel wird abgebremst und gegebenenfalls in einer Drehwinkellage positioniert, ein Spannmittel wird gelöst, das bearbeitete Werkstück wird entnommen, das Spannmittel wird gereinigt, ein zu bearbeitendes Werkstück wird beladen, das Spannmittel wird gespannt, die planparallele Anlage wird mit an sich bekannten Sensoren kontrolliert, und schließlich wird die Werkstückspindel wieder auf volle Drehzahl beschleunigt. Bei diesem Betriebsverfahren findet eine Bearbeitung stets nur an einer Werkstückspindel statt. Ein bearbeitetes Werkstück der ersten Werkstückspindel kann im Rahmen der Erfindung ein zu bearbeitendes Werkstück der zweiten Werkstückspindel darstellen, oder umgekehrt. Dazu kann ein Zwischenlager eingesetzt werden. Werkstücke und Bearbeitungsart an der ersten und zweiten Werkstückspindel können aber auch völlig unabhängig voneinander sein.

Im Rahmen dieses Betriebsverfahrens wird in den Schritten b), c) und d) zwischen dem Werkzeugträger und der im Werkstücktausch befindlichen Werkstückspindel ein Schutzschild positioniert. Der Schutzschild verhindert eine Verschmutzung der jeweils im Werkstücktausch befindlichen Werkstückspindel durch die Bearbeitung an der anderen Werkstückspindel, und ein ausreichender Personenschutz bzw. Schutz von Werkstückhandlingmaschinen ist gewährleistet, um ein einen Werkstücktausch an der ruhenden Werkstückspindel vorzunehmen. Ebenfalls können die Abmessungen, d.h. die Zwischenräume zwischen den Werkstückspindeln einerseits und dem Werkzeugträger andererseits minimiert werden, wenn zwischen dem in Bearbeitung befindlichen Werkstück und der ruhenden Werkstückspindel ein Schutzschild vorgesehen ist. Mit dieser Maßnahme lässt sich die Nebenzeit noch weiter verkürzen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung

Die Erfindung ist in der Zeichnung dargestellt und wird anhand von Ausführungsbeispielen näher erläutert. Es zeigt:
- Fig. 1: eine Ausführungsform einer erfindungsgemäßen Drehmaschine, unter Weglassung von Schutzgehäuse und Schilden, in schematischer Schrägansicht;
- Fig. 2:: die Ausführungsform von Fig. 1 mit Schutzgehäuse und Schilden in schematischer Schrägansicht; und
- Fig. 3: eine schematische Draufsicht der Ausführungsform von Fig. 2 auf Höhe des Schlittens mit zusätzlicher Schutzwand in einer zu Fig. 2 veränderten Bearbeitungsposition.

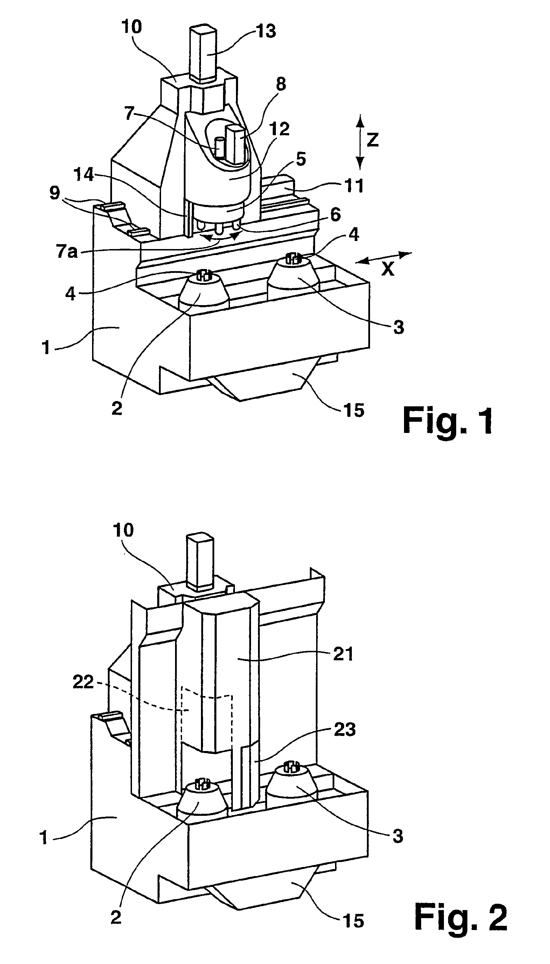

Fig. 1 zeigt eine Vertikaldrehmaschine gemäß der Erfindung. Die Drehmaschine umfasst ein Maschinenbett 1, in dem ortsfest eine erste Werkstückspindel 2 und eine zweite Werkstückspindel 3 angeordnet sind. Das Maschinenbett 1 ist ortsfest aufgestellt und bevorzugt als Monoblock ausgestaltet. Die Spindelachsen der Werkstückspindeln 2, 3 sind beide vertikal ausgerichtet, entsprechend der z-Richtung in Fig. 1. Die Werkstückspindeln 2, 3 weisen jeweils ein oben liegendes Spannmittel 4 auf, das als Spannfutter ausgebildet ist und in das ein Werkstück (nicht dargestellt) eingespannt werden kann. Weiterhin weist die Vertikaldrehmaschine einen Werkzeugträger 5 auf, der als Revolverdrehkopf ausgebildet ist und an dem mehrere Werkzeuge 6 angeordnet sind. Der Revolverdrehkopf ist über eine vertikale Welle 7 mittels eines Motors 8 in Pfeilrichtungen 7a je nach Bedarf drehbar, d.h. ausrichtbar, so dass ein bestimmtes Werkzeug 6 ausgewählt werden kann. Die Werkzeuge 6 dienen zur Bearbeitung von Werkstücken auf den Werkstückspindeln 2, 3.

Das Maschinenbett 1 weist Führungen 9 für einen Fahrständer 10 auf. Der Fahrständer 10 ist mittels eines Motors 11 entlang dieser Führungen 9 in x-Richtung verfahrbar. Die x-Richtung ist parallel zu der Richtung, in der die Werkstückspindeln 2, 3 aufgereiht sind. An dem Fahrständer 10 sind wiederum Führungen 14 angeordnet, auf denen ein Schlitten 12 mit Hilfe eines Motors 13 parallel zu den Spindelachsen der Werkstückspindeln 2, 3, also vertikal, verfahrbar ist. Auf dem Schlitten 12 ist der Werkzeugträger 5 angeordnet, wobei der Revolverdrehkopf unmittelbar im Schlitten 12 drehbar gehalten ist; dies ist besonders präzise. Fasst man den Revolverdrehkopf samt seiner Halterung als eine Einheit, nämlich als den Werkzeugträger 5, auf, so ist der Werkzeugträger 5 auch als Schlitten 12 ausgebildet. Durch den Schlitten 12 ist der Werkzeugträger 5 relativ zum Maschinenbett 1, und damit auch relativ zu den im Maschinenbett 1 ortsfesten Werkstückspindeln 2, 3, in x- und z-Richtung verfahr- und ausrichtbar. Die Motoren 11, 13 wirken bevorzugt mit einer Kugelrollspindel zusammen, können aber auch als Lineardirektantrieb wirken.

Zur Bearbeitung eines Werkstücks im Spannmittel 4 beispielsweise der ersten Werkstückspindel 2 wird der Werkzeugträger 5 so ausgerichtet und verfahren, dass eines der Werkzeuge 6 dieses Werkstück berührt, während es mit der gewünschten Drehzahl um die Spindelachse der ersten Werkstückspindel 2 dreht; die Werkstückspindel 2 kann sowohl als Motorspindel als auch als angetriebene Spindel ausgeführt sein; jedenfalls sind die Werkstückspindeln 2, 3 jeweils einzeln ansteuerbar. Während der Bearbeitung eines Werkstücks durch ein Werkzeug 6 am Revolverdrehkopf wird Material vom Werkstück abgetragen. Das abgetragene Material gelangt in einen Spänetrichter 15, wo es infolge Schwerkraft an den Innenwänden des Spänetrichters 15 nach unten gleitet und über einen nicht dargestellten Späneförderer abgeführt wird. Der Spänetrichter 15 ist aus doppelwandigem Blech (Bleche haben einen Abstand und dadurch wird die Luftkühlung erreicht) gefertigt, so dass die im Spänetrichter 15 innen liegende Blechlage luftgekühlt ist. Der Werkzeugträger 5 kann während der Werkstückbearbeitung mittels der Motoren 11, 13 in x- und/oder z-Richtung nachgeführt werden. Für einen Werkzeugwechsel kann der Werkzeugträger 5 mittels der Motoren 11, 13 vom Werkstück entfernt werden, und mittels des Motors 8 des Revolverdrehkopfs kann ein anderes Werkzeug 6 in Position gebracht werden. Anschließend wird der Werkzeugträger 5 wieder an das Werkstück zur Bearbeitung herangeführt.

Währenddessen findet an der zweiten Werkstückspindel 3 keine Bearbeitung eines Werkstücks statt. An der zweiten Werkstückspindel 3 besteht vielmehr die Möglichkeit, manuell oder mittels nicht dargestellter automatischer Vorrichtungen ein bearbeitetes Werkstück im Spannmittel 4 der zweiten Werkstückspindel 3 gegen ein noch zu bearbeitendes Werkstück auszutauschen. Insgesamt wird dadurch ein pausenloser, zwischen den Werkstückspindeln pendelnder, quasi endloser Betrieb des Werkzeugträgers bzw. der Drehmaschine möglich. Durch einen Werkstückwechsel entstehen keinerlei Stillstandzeiten. Die Werkzeuge sind nur dann nicht im Einsatz, wenn in der Bearbeitungsabfolge eines Werkstücks zwischen verschiedenen Werkzeugen gewechselt wird, wenn von einer Werkstückspindel zur anderen gependelt wird, oder wenn ein oder mehrere Werkzeuge des Werkzeugträgers ausgetauscht werden müssen, etwa aufgrund von Verschleiß.

Um eine gegenseitige Verschmutzung der Werkstückspindeln 2, 3 und der zugehörigen Werkstücke zu vermeiden kann ein Schutzgehäuse 21 eingesetzt werden, wie in Fig. 2 dargestellt. Das Schutzgehäuse 21 umschließt im Wesentlichen den Werkzeugträger (in Fig. 2 verdeckt) und dessen unmittelbare Umgebung. Das Schutzgehäuse 21 ist fest mit dem Fahrständer 10 verbunden; es kann aber grundsätzlich auch mit dem Schlitten oder dem Maschinenbett 1 verbunden sein.

Das Schutzgehäuse 21 weist eine erste und eine zweite vertikal verfahrbare Schiebetür 22, 23 auf, wobei in Fig. 2 die erste Schiebetür 22 in einer oberen Position ist, in der die erste Schiebetür 22 hinter der Wand des Schutzgehäuses 21 verschwindet, was durch die gestrichelte Kontur der ersten Schiebetür 22 angedeutet ist. Dadurch wird eine Öffnung ins Innere des Schutzgehäuses 21 freigegeben. Diese Öffnung gestattet es, den Werkzeugträger an die erste Werkstückspindel 2 bzw. das dort eingespannte Werkstück heranzuführen und dieses zu bearbeiten. Die zweite Schiebetür 23 ist in einer unteren, geschlossenen Position, die die zweite Werkstückspindel 3 vom Werkzeugträger 5 und von der ersten Werkstückspindel 2 abtrennt. Dadurch kann Schmutz, der bei einer Bearbeitung des Werkstücks der ersten Werkstückspindel 2 entsteht, nicht zur zweiten Werkstückspindel 3 oder einem in diesem Bereich tätigen Werker gelangen.

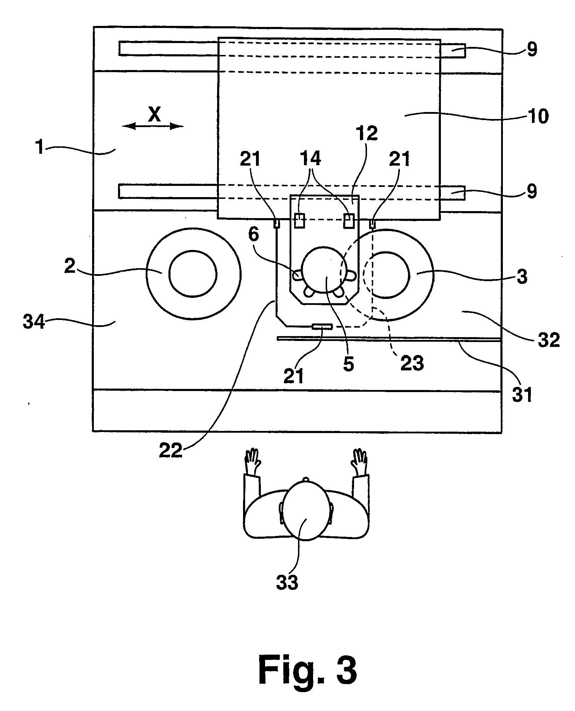

In Fig. 3 ist die Vertikaldrehmaschine weitestgehend vergleichbar mit Fig. 2 in einem Horizontalschnitt auf Höhe des Schlittens 12 mit Blick nach unten dargestellt.

Der Werkzeugträger 5, mit einigen Werkzeugen 6, ist auf dem Schlitten 12 angeordnet, der mittels Führungen 14 senkrecht zur Zeichenebene von Fig. 3 in z-Richtung verfahrbar ist. Diese Führungen 14 sind auf dem beweglichen Fahrständer 10 angebracht, der seinerseits mittels der Führungen 9 in x-Richtung verfahrbar ist. Die Führungen 9 sind im Maschinenbett 1 angebracht.

Der Werkzeugträger 5 ist - anders als in Fig. 2 - nahe an die zweite Werkstückspindel 3 herangefahren, um ein dort eingespanntes Werkstück (nicht dargestellt) zu bearbeiten. Vom Schutzgehäuse 21, das den Werkzeugträger 5 umgibt, sind in der Darstellung von Fig. 3 nur eine Mittelsäule sowie zwei Randabschnitte zu sehen. Die erste Schiebetür 22 ist geschlossen, wohingegen die zweite Schiebetür 23 geöffnet ist, was durch deren gestrichelte Linie angedeutet ist. Weiterhin ist eine Schutzwand 31 vorgesehen, die einen Arbeitsraum 32 um die zweite Werkstückspindel 3 herum abgrenzt, zusammen mit der ersten Schiebetür 22 und weiteren, nicht näher dargestellten rechtsseitigen und rückseitigen Begrenzungen. Die Schutzwand 31 verfügt über ein Sichtfenster, das einem Werker 33 eine Sichtkontrolle des Drehprozesses an der zweiten Werkstückspindel 3 ermöglicht. Die Schutzwand 31 verhindert, dass Schmutz beim Drehvorgang an der Werkstückspindel 3 in die Umgebung, insbesondere zum Werker 33 gelangt.

Ein anderer Arbeitsraum 34 um die erste Werkstückspindel 2 ist für den Werker 33 frei zugänglich, so dass dieser manuell ein Werkstück der ersten Werkstückspindel 2 austauschen kann. Alternativ kann auch eine automatische Werkstückwechselvorrichtung vorgesehen sein. Der Werkstückwechsel findet erfindungsgemäß gleichzeitig mit dem Bearbeitungsprozess an der anderen Werkstückspindel 3 statt.

Die Schutzwand 31 kann gemeinsam mit dem Fahrständer 10 und dem Werkzeugträger 5 in x-Richtung nach links verschoben werden, wenn mit der Bearbeitung auf das Werkstück der ersten Werkstückspindel 2 gewechselt wird. Gleichzeitig wird die erste Schiebetür 22 geöffnet und die zweite Schiebetür 23 geschlossen, so dass wiederum zwei abgetrennte Arbeitsräume 32, 34 jeweils um die Werkstückspindeln 2, 3 eingerichtet sind. Erfindungsgemäß sind die Arbeitsräume 34, 32 um die Werkstückspindeln 2, 3 herum jeweils gegenüber dem anderen Arbeitsraum 32, 34 spandicht und schmiermitteldicht abgeschirmt, so dass derjenige Arbeitsraum, in dem ein Werkstück gewechselt wird, jeweils spanfrei als auch kühl- und schmiermittelfrei ist.

## Patentansprüche

1. Drehmaschine umfassend ein Maschinenbett (1) und eine erste und eine zweite Werkstückspindel (2, 3), wobei die Werkstückspindeln (2, 3) parallel zueinander angeordnet sind, und weiterhin umfassend genau einen Werkzeugträger (5) für ein oder mehrere Werkzeuge (6), wobei die Spindelachsen der Werkstückspindeln (2, 3) vertikal ausgerichtet sind, wobei die Werkstückspindeln (2, 3) ein oben aufgebautes Spannmittel (4) aufweisen,
und wobei der Werkzeugträger (5) relativ zum Maschinenbett (1) verfahrbar ist, so dass alternativ entweder ein Werkstück der ersten Werkstückspindel (2) oder ein Werkstück der zweiten Werkstückspindel (3) mit einem Werkzeug (6) des Werkzeugträgers (5) bearbeitbar ist,
**dadurch gekennzeichnet,**
**dass** der Werkzeugträger (5) als Revolverdrehkopf ausgebildet ist,
und **dass** zwei bewegliche Schutzschilde vorgesehen sind, wobei das erste Schutzschild zwischen der ersten Werkstückspindel (2) und dem Werkzeugträger (5) anordenbar ist, wenn der Werkzeugträger (5) in einer ersten Position ist, in der ein Werkstück der zweiten Werkstückspindel (3) bearbeitbar ist,
und wobei das zweite Schutzschild zwischen der zweiten Werkstückspindel (3) und dem Werkzeugträger (5) anordenbar ist, wenn der Werkzeugträger (5) in einer zweiten Position ist, in der ein Werkstück der ersten Werkstückspindel (1) bearbeitbar ist.

2. Drehmaschine nach Anspruch 1, **dadurch gekennzeichnet, dass** der Werkzeugträger (5) in einer ersten Richtung (z-Richtung) parallel zu den Spindelachsen der Werkstückspindeln (2, 3) und in einer zweiten Richtung (x-Richtung) senkrecht zur ersten Richtung auf einer Verbindungslinie zwischen den Spindelachsen mit Hilfe von Führungen (9, 14) verfahrbar ist.

3. Drehmaschine nach Anspruch 2, **dadurch gekennzeichnet, dass** der Werkzeugträger (5) durch einen Fahrständer (10) verfahrbar ist.

4. Drehmaschine nach Anspruch 3, **dadurch gekennzeichnet, dass** ein Schutzgehäuse (21) vorgesehen ist, das im Wesentlichen den Werkzeugträger (5) und dessen unmittelbare Umgebung umschließt und fest mit dem Fahrständer (10) verbunden ist.

5. Drehmaschine nach Anspruch 3 oder 4, **dadurch gekennzeichnet, dass** der Fahrständer (10) in Mineralguss ausgeführt ist.

6. Drehmaschine nach Anspruch 2, **dadurch gekennzeichnet, dass** der Werkzeugträger (5) durch einen Kreuzschlitten verfahrbar ist.

7. Drehmaschine nach einem der Ansprüche 2 bis 5, **dadurch gekennzeichnet, dass** der Werkzeugträger (5) als Z-Schlitten ausgebildet ist.

8. Drehmaschine nach einem der Ansprüche 2 bis 7, **dadurch gekennzeichnet, dass** bei der Drehmaschine Rollenschuhe für das Zusammenwirken mit den Führungen (9, 14) vorgesehen sind, und dass die Rollenschuhe der X-Führung (9) und der Z-Führung (14) direkt übereinander liegen, wenn der Werkzeugträger (5) sich näherungsweise in einer zur Bearbeitung eines Werkstücks einer Werkstückspindel (2, 3) geeigneten Position befindet.

9. Drehmaschine nach einem der vorhergehenden Ansprüche, **dadurch gekennzeichnet, dass** die Werkstückspindeln (2, 3) ortsfest im Maschinenbett (1) angeordnet sind.

10. Drehmaschine nach einem der Ansprüche 2 bis 9, **dadurch gekennzeichnet, dass** im Maschinenbett (1) zylindrische Aufnahmen für die Werkstückspindeln (2, 3) vorgesehen sind, wobei sowohl die X-Führungen (9) als auch die zylindrischen Aufnahmen direkt im Maschinenbett (1) ausgebildet sind.

11. Drehmaschine nach einem der vorhergehenden Ansprüche, **dadurch gekennzeichnet, dass** das Maschinenbett (1) als Mineralgussbett ausgebildet ist.

12. Drehmaschine nach einem der vorhergehenden Ansprüche, **dadurch gekennzeichnet, dass** das gesamte Maschinenbett (1) einen temperaturisolierten Spänedurchfluss aufweist.

13. Drehmaschine nach einem der vorhergehenden Ansprüche, **dadurch gekennzeichnet, dass** ein Schutzgehäuse (21) vorgesehen ist, in dem das erste und das zweite bewegliche Schutzschild als eine erste und eine zweite vertikal verfahrbare Schiebetür (22, 23) ausgebildet sind.

## Claims

1. A turning machine comprising a machine bed (1) and a first and second workpiece spindle (2, 3), whereby the workpiece spindles (2, 3) are disposed parallel to one another, and further comprising precisely one tool carrier (5) for one or more tools (6), whereby the spindle axes of the workpiece spindles (2, 3) are orientated vertically, whereby the workpiece spindles (2, 3) have a clamping means (4) mounted at the top, and whereby the tool carrier (5) is moveable relative to the machine bed (1), so that either a workpiece of the first workpiece spindle (2) or a workpiece of the second workpiece spindle (3) can alternatively be machined with a tool (6) of the tool carrier (5),
**characterised in that**
the tool carrier (5) is designed as a revolver rotary head,
and that two mobile protective shields are provided, whereby the first protective shield can be disposed between the first workpiece spindle (2) and the tool carrier (5) when the tool carrier (5) is in a first position, in which a workpiece of the second workpiece spindle (3) can be machined,
and whereby the second protective shield can be disposed between the second workpiece spindle (3) and the tool carrier (5) when the tool carrier (5) is in a second position, in which a workpiece of the first workpiece spindle (1) can be machined.

2. The turning machine according to claim 1, **characterised in that** the tool carrier (5) is moveable with the aid of guides (9, 14) in a first direction (z-direction) parallel to the spindle axes of the workpiece spindles (2, 3) and in a second direction (x-direction) normal to the first direction on a connecting line between the spindle axes.

3. The turning machine according to claim 2, **characterised in that** the tool carrier (5) is moveable by means of a travelling stand (10).

4. The turning machine according to claim 3, **characterised in that** a protective housing (21) is provided, which essentially encloses the tool carrier (5) and its immediate vicinity and is rigidly connected to the travelling stand (10).

5. The turning machine according to claim 3 or 4, **characterised in that** the travelling stand (10) is made in molded mineral.

6. The turning machine according to claim 2, **characterised in that** the tool carrier (5) is moveable by means of a cross slide.

7. The turning machine according to any one of claims 2 to 5, **characterised in that** tool carrier (5) is designed as a Z-slide.

8. The turning machine according to any one of claims 2 to 7, **characterised in that**, in the turning machine, roller shoes are provided for cooperation with the guides (9, 14), and that the roller shoes of the X-guide (9) and of the Z-guide (14) lie directly one above the other when the tool carrier (5) is located approximately in a position suitable for machining a workpiece of a workpiece spindle (2, 3).

9. The turning machine according to any one of the preceding claims, **characterised in that** the workpiece spindles (2, 3) are disposed fixedly in the machine bed (1).

10. The turning machine according to any one of claims 2 to 9, **characterised in that** cylindrical receptacles for the workpiece spindles (2, 3) are provided in the machine bed (1), whereby both the X-guides (9) and the cylindrical receptacles are formed directly in the machine bed (1).

11. The turning machine according to any one of the preceding claims, **characterised in that** the machine bed (1) is designed as a molded mineral bed.

12. The turning machine according to any one of the preceding claims, **characterised in that** the whole machine bed (1) has a temperature-insulated chip passage.

13. The turning machine according to any one of the preceding claims, **characterised in that** a protective housing (21) is provided, in which the first and the second mobile protective shield are designed as a first and a second vertically moveable sliding door (22, 23).

## Revendications

1. Tour comprenant un banc de machine (1) et une première et une seconde broches porte-pièce (2, 3), les broches porte-pièce (2, 3) étant disposées parallèlement l'une à l'autre, et comprenant également exactement un porte-outils (5) pour un ou plusieurs outils (6), les axes de broche des broches porte-pièce (2, 3) étant disposés verticalement, les broches porte-pièce (2, 3) présentant un moyen de serrage (4) monté en partie haute, et le porte-outils (5) étant déplaçable par rapport au banc de machine (1) de façon que soit une pièce de la première broche porte-pièce (2), soit une pièce de la seconde broche porte-pièce (3) puisse alternativement être usinée avec un outil (6) du porte-outils (5),
**caractérisé en ce**
**que** le porte-outils (5) est réalisé sous forme de tourelle revolver,
et **que** deux écrans mobiles sont prévus, le premier écran pouvant être disposé entre la première broche porte-pièce (2) et le porte-outils (5) quand le porte-outils (5) est dans une première position dans laquelle une pièce de la seconde broche porte-pièce (3) peut être usinée,
et le second écran pouvant être disposé entre la seconde broche porte-pièce (3) et le porte-outils (5) quand le porte-outils (5) est dans une seconde position dans laquelle une pièce de la première broche porte-pièce (1) peut être usinée.

2. Tour selon la revendication 1, **caractérisé en ce que** le porte-outils (5) est déplaçable à l'aide de guides (9, 14) dans une première direction (direction z) parallèle aux axes des broches porte-pièce (2, 3) et dans une seconde direction (direction x) perpendiculaire à la première direction sur une ligne passant par les axes de broche.

3. Tour selon la revendication 2, **caractérisé en ce que** le porte-outils (5) est déplaçable au moyen d'une colonne mobile (10).

4. Tour selon la revendication 3, **caractérisé en ce qu'**un carter de protection (21) est prévu, lequel entoure essentiellement le porte-outils (5) et son environnement immédiat et est solidaire de la colonne mobile (10).

5. Tour selon la revendication 3 ou 4, **caractérisé en ce que** la colonne mobile (10) est réalisée en fonte minérale.

6. Tour selon la revendication 2, **caractérisé en ce que** le porte-outils (5) est déplaçable au moyen d'un chariot à croix.

7. Tour selon l'une des revendications 2 à 5, **caractérisé en ce que** le porte-outils (5) est réalisé sous forme de chariot Z.

8. Tour selon l'une des revendications 2 à 7, **caractérisé en ce que** des patins à galets sont prévus sur le tour pour la coopération avec les guides (9, 14) et que les patins à galets du guide X (9) et du guide Z (14) sont directement superposés quand le porte-outils (5) se trouve approximativement dans une position appropriée à l'usinage d'une pièce d'une broche porte-pièce (2, 3).

9. Tour selon l'une des revendications précédentes, **caractérisé en ce que** les broche porte-pièce (2, 3) sont disposées à poste fixe dans le banc de machine (1).

10. Tour selon l'une des revendications 2 à 9, **caractérisé en ce que** des logements cylindriques pour les broche porte-pièce (2, 3) sont prévus dans le banc de machine (1), aussi bien les guides X (9) que les logements cylindriques étant formés directement dans le banc de machine (1).

11. Tour selon l'une des revendications précédentes, **caractérisé en ce que** le banc de machine (1) est réalisé sous forme de banc en fonte minérale.

12. Tour selon l'une des revendications précédentes, **caractérisé en ce que** tout le banc de machine (1) présente un passage de copeaux thermiquement isolé.

13. Tour selon l'une des revendications précédentes, **caractérisé en ce qu'**un carter de protection (21) est prévu, dans lequel le premier et le second écrans mobiles sont réalisés sous la forme d'une première et d'une seconde portes coulissantes (22, 23) déplaçables verticalement.
